# FASCICULE DE BREVET EUROPEEN

(11) **EP 3 726 558 B1**
(45) Date de publication et mention de la délivrance du brevet: **04.08.2021**
(21) Numéro de dépôt: 20163454.0
(22) Date de dépôt: 16.03.2020
(51) Int. Cl.: H01H 47/02, H01H 47/32

(54) **DISPOSITIF DE PROTECTION PAR RELAIS ELECTROMECANIQUE A CONSOMMATION REDUITE, ET APPLICATION AUX DISPOSITIFS DE COMMANDE PWM D'ACTIONNEURS ELECTRIQUES**
ELEKTROMECHANISCHE RELAIS-SCHUTZVORRICHTUNG MIT NIEDRIGEM VERBRAUCH, UND ANWENDUNG IN PWM-STEUERVORRICHTUNGEN VON ELEKTRISCHEN STELLGLIEDERN
DEVICE FOR PROTECTING BY ELECTROMECHANICAL RELAY WITH REDUCED CONSUMPTION, AND APPLICATION TO PWM CONTROL DEVICES OF ELECTRICAL ACTUATORS

(30) Priorité: 16.04.2019 FR 1904022
(43) Date de publication de la demande: 21.10.2020
(73) Titulaire: G. Cartier Technologies, 74302 Cluses (FR)
(72) Inventeur: NOURDINE, Amir, 74300 Cluses (FR)
(74) Mandataire: Cabinet Poncet

(56) Documents cités:
- US-A1- 2006 221 534
- US-A1- 2009 284 889

## Description

### DOMAINE TECHNIQUE DE L'INVENTION

La présente invention concerne les dispositifs de commande permettant de commander la vitesse de déplacement d'un actionneur électrique, notamment la vitesse de rotation d'un moteur électrique à courant continu servant à la ventilation des échangeurs et du moteur thermique d'un véhicule automobile, pour leur refroidissement.

Dans un véhicule automobile, l'échangeur thermique associé au refroidissement de l'eau servant au transfert des calories générées par le moteur thermique est généralement couplé, par mise en série dans un même flux d'air de refroidissement, avec l'échangeur servant à l'évacuation des calories issues de la compression du gaz utilisé pour la climatisation. Un ventilateur, entraîné en rotation par un moteur à courant continu, est placé devant ou derrière ces échangeurs afin de générer le flux d'air de refroidissement devant les traverser pour faciliter les échanges thermiques. Ce flux d'air de refroidissement est ensuite dirigé vers le moteur thermique.

Les besoins en débit d'air associés à ce couple « échangeur de refroidissement moteur - échangeur de climatisation » peuvent aller :
- d'une ventilation douce, dans le cas d'une température basse du moteur thermique et d'une demande modérée de la climatisation alors que le véhicule est roulant et que sa vitesse de déplacement génère déjà ainsi un flux d'air,
- à une ventilation maximale, dans le cas d'un véhicule à l'arrêt avec moteur thermique en surchauffe après une longue montée avec véhicule chargé, couplée à une forte température externe générant un besoin en climatisation important.

Cette différence de besoins est traitée de préférence par des vitesses variables du ventilateur, réalisées par un module de commande générant une tension variable sur les bornes d'alimentation du moteur à courant continu.

Un type connu de module de commande à tension variable utilise un dispositif électronique de découpage de tension à modulation de largeur, généralement désigné par le sigle PWM (pulse width modulation - modulateur de largeur d'impulsion), produisant une tension de sortie qui est tantôt égale à la tension d'entrée pendant des étapes de conduction, tantôt proche de zéro pendant des étapes de non-conduction, et dont on fait varier la valeur moyenne par la modification du rapport des durées des étapes de conduction et des étapes de non-conduction. On peut ainsi moduler la vitesse de rotation du moteur électrique de façon fine et progressive. Ce type de module électronique de commande à modulation de largeur est décrit par exemple dans le document US 6,369,533 B1.

L'avantage essentiel de la technologie à découpage de tension à modulation de largeur PWM est de permettre de réguler en continu le fonctionnement de l'actionneur, entre un fonctionnement à vitesse quasi nulle et un fonctionnement à pleine vitesse, tout en limitant les pertes énergétiques dans le dispositif électronique de commande lui-même.

Simultanément au besoin d'un module électronique de commande générant une tension variable aux bornes de l'actionneur électrique tout en limitant les pertes énergétiques, il y a un besoin, dans les véhicules automobiles, de disposer d'un relais électromécanique de protection, pour isoler électriquement de façon fiable les modules de commande électroniques vis-à-vis de la batterie du véhicule en mode parking. Ce relais électromécanique sert notamment à limiter les risques d'incendies susceptibles de se produire en cas de défaillance de composants électroniques lorsque le véhicule est en mode parking. Ce relais électromécanique évite aussi la décharge de la batterie du véhicule si un organe du module électronique consomme un courant électrique résiduel anormal alors que son fonctionnement n'est pas activé. Ce relais électromécanique peut également protéger le module électronique en cas d'inversion accidentelle de polarité de la tension d'entrée.

Le développement des véhicules modernes, notamment hybrides, conduit à un manque de place disponible pour les divers composants du système de motorisation. Il en résulte que les constructeurs automobiles cherchent actuellement à réduire le volume des composants, notamment le volume des modules de commande électroniques.

Du fait du manque de place dans le système de motorisation, les moteurs des véhicules automobiles d'aujourd'hui ont tendance à fonctionner dans des atmosphères de plus en plus chaudes et dans des espaces de plus en plus confinés.

La réduction de la place disponible et l'augmentation générale de la température de l'atmosphère environnant les modules de commande électroniques rendent difficile l'évacuation des calories qui sont inévitablement générées dans les modules de commande électroniques. Il en résulte, malgré la limitation des pertes énergétiques assurées par l'utilisation de la technologie à découpage tension par modulation de largeur PWM, un risque d'élévation de température susceptible de diminuer la durée de vie des composants électroniques du module de commande électronique, notamment ceux de type transistor à effet de champ à grille isolée (MOSFET), ou susceptible de provoquer une défaillance de ces composants électroniques, pouvant mener à des risques d'incendie du véhicule.

Pour réduire l'encombrement général du dispositif de commande électronique, et pour faciliter son implantation dans le système de motorisation, il est a priori souhaitable d'incorporer le relais électromécanique à l'intérieur du boîtier du module de commande électronique. Toutefois, le relais électromécanique est un organe qui par lui-même génère également un échauffement résultant du passage du courant électrique d'actionnement dans sa bobine de commande. Cet échauffement est susceptible d'augmenter encore la température de fonctionnement des composants électroniques du module de commande électronique, ce qui est fortement déconseillé. Il en résulte une difficulté réelle pour incorporer un tel relais électromécanique dans les modules de commande électroniques destinés à être implémentés dans les véhicules automobiles modernes.

Pour réduire l'échauffement résultant du passage du courant électrique d'actionnement dans la bobine de commande d'un relais électromécanique pouvant être utilisé dans les automobiles, le document US 2009/0284889 A1 enseigne d'alimenter la bobine du relais électromécanique par un circuit de commande électronique permettant de générer un courant d'enclenchement suffisant pour enclencher le relais électromécanique, et permettant de générer ensuite un courant de maintien inférieur au courant d'enclenchement mais suffisant pour maintenir enclenché le relais électromécanique. Le circuit de commande électronique est alimenté indépendamment de l'état du relais électromécanique.

Pour réduire encore la consommation d'énergie dans une bobine sollicitant une électrovanne, le document US 2006/0221534 A1 enseigne d'alimenter la bobine par un circuit de commande à découpage de tension à modulation de largeur PWM. Le circuit de commande est alimenté indépendamment de l'état de l'électrovanne.

Toutefois, les circuits de commande d'alimentation de la bobine du relais électromécanique ou de l'électrovanne, dans l'un et l'autre de ces documents, ne permettent pas d'assurer une sécurité efficace contre les risques d'incendie pouvant résulter d'une défaillance des composants du circuit de commande lui-même. En effet, ces circuits de commande sont alimentés directement par la source d'énergie principale, et ne seraient pas adaptés pour être alimentés par l'intermédiaire d'un relais actionné par la bobine elle-même.

### EXPOSE DE L'INVENTION

La présente invention vise à réduire sensiblement les pertes énergétiques générées dans un relais électromécanique de protection intégré dans un dispositif de commande électronique d'actionneur dans un véhicule automobile.

Simultanément, l'invention vise à limiter efficacement les risques d'incendie ou de consommation anormalement élevée pouvant résulter d'une défaillance des composants électroniques utilisés pour le circuit de commande permettant de réduire les pertes énergétiques du relais électromécanique de protection.

Simultanément, l'invention vise à résoudre ces problèmes de façon économique, avec un circuit de commande peu onéreux.

Pour atteindre ces objets ainsi que d'autres, selon un premier aspect, l'invention propose d'utiliser un circuit de commande à découpage de tension à modulation de largeur PWM pour alimenter la bobine de relais, et d'alimenter ledit circuit de commande en aval du contact de puissance du relais. De la sorte, lorsque le relais électromécanique est à l'état ouvert, par exemple dans le cas d'un véhicule en parking, le relais électromécanique isole le circuit de commande de bobine vis-à-vis de la source d'énergie principale, et évite les risques d'incendie en cas de défaillance des composants électroniques de ce circuit de commande. Mais il faut alors prévoir des moyens pour que le circuit de commande puisse alimenter la bobine du relais dès l'établissement d'une connexion avec la source d'énergie principale, malgré l'état ouvert du relais non encore actionné par la bobine.

Ainsi, selon un premier aspect de l'invention, le dispositif de protection par relais électromécanique comprend :
- un relais électromécanique, ayant un circuit magnétique dans lequel un champ magnétique est généré par une bobine de commande lorsque celle-ci est parcourue par un courant électrique fourni sur ses bornes électriques d'entrée, et ayant un circuit de puissance à contact déplaçable sous l'effet dudit champ magnétique pour être normalement ouvert lorsque la bobine de commande n'est pas alimentée et pour se fermer lorsque la bobine de commande est alimentée selon une tension supérieure à une tension d'enclenchement, ledit contact étant connecté électriquement en série entre une entrée de relais et une sortie de relais, l'entrée de relais étant destinée à être connectée à une source d'alimentation à courant continu, la sortie de relais étant destinée à être connectée pour alimenter un module à protéger,
- un dispositif de commande de bobine, de type à découpage de tension à modulation de largeur PWM, connecté pour alimenter la bobine de commande selon au moins une tension moyenne prédéterminée inférieure à la tension de la source d'alimentation à courant continu,
- le dispositif de commande de bobine est agencé pour fournir à la bobine de commande une première tension moyenne prédéterminée supérieure à la tension d'enclenchement du relais électromécanique pendant une étape d'enclenchement à durée prédéfinie après que le dispositif de commande de bobine ait été alimenté à partir de la source d'alimentation à courant continu,
- le dispositif de commande de bobine est agencé pour fournir à la bobine de commande une deuxième tension moyenne prédéterminée peu supérieure à une tension de déclenchement du relais électromécanique après l'étape d'enclenchement, et pour maintenir ladite deuxième tension moyenne prédéterminée tant que le dispositif de commande de bobine reste alimenté à partir de la source d'alimentation à courant continu,
- le dispositif de commande de bobine est agencé pour interdire l'alimentation de la bobine de commande lorsque le dispositif de commande de bobine n'est pas alimenté,
- le dispositif de commande de bobine comprend un commutateur électronique piloté, par l'intermédiaire d'une interface, par un générateur de tension de commande,
- la bobine de commande est connectée d'un côté à l'entrée de relais par l'intermédiaire dudit commutateur électronique du dispositif de commande de bobine, et est connectée de l'autre côté à une masse commune par l'intermédiaire d'un commutateur maître extérieur au dispositif de protection par relais électromécanique,
- le générateur de tension de commande est alimenté entre la masse commune et la sortie de relais, de sorte qu'il n'est alimenté et ne fonctionne que lorsque ledit contact du relais électromécanique est fermé,
- le commutateur électronique est agencé pour être à l'état fermé lorsque le commutateur maître est fermé et en l'absence de signal reçu du générateur de tension de commande, et pour être à l'état ouvert en présence d'un signal reçu du générateur de tension de commande.

Un tel dispositif de protection par relais électromécanique peut être interposé entre une source d'alimentation à courant continu et un module à protéger, par exemple un module de commande de moteur électrique dans un véhicule automobile. Lorsque le relais électromécanique est déclenché, c'est-à-dire lorsque son contact est ouvert, le module et le circuit de commande de la bobine du relais électromécanique sont isolés de façon certaine vis-à-vis de la source d'alimentation à courant continu, de sorte qu'un éventuel défaut des composants électroniques du module et de la commande ne risque pas de provoquer un incendie du véhicule. Dès que le commutateur maître est fermé, la bobine de commande du relais électromécanique est alimentée à travers le commutateur électronique, de sorte que le relais électromécanique se ferme et alimente le générateur de tension de commande pour permettre le fonctionnement normal du dispositif de commande de bobine à découpage de tension à modulation de largeur PWM.

Simultanément, le dispositif de commande de bobine du relais électromécanique, de type à découpage de tension à modulation de largeur PWM, qui alimente la bobine de commande selon une tension moyenne réduite, permet de limiter considérablement les pertes énergétiques dans le relais électromécanique, et de réduire simultanément l'échauffement provoqué par le dispositif de protection par relais électromécanique lors de son fonctionnement. Il est ainsi possible d'envisager l'incorporation du dispositif de protection par relais électromécanique dans un boîtier contenant simultanément le module à protéger.

Le choix d'une première tension moyenne prédéterminée, selon une valeur inférieure à la tension de la source d'alimentation à courant continu, mais supérieure à la tension d'enclenchement du relais électromécanique, permet de réduire les pertes énergétiques du relais électromécanique de protection tout en assurant un enclenchement fiable du relais électromécanique dès que le dispositif de commande de bobine a été alimenté à partir de la source d'alimentation à courant continu. Simultanément, une deuxième tension moyenne prédéterminée, choisie à une valeur peu supérieure à la tension de déclenchement du relais électromécanique, par exemple supérieure de 1 Volt à la tension de déclenchement, est suffisante pour maintenir l'enclenchement du relais électromécanique après l'étape d'enclenchement, mais est inférieure à la première tension moyenne prédéterminée . Il en résulte que les pertes énergétiques du relais électromécanique de protection sont encore réduites, sans pour autant perturber le fonctionnement correct du relais électromécanique. De préférence, la première tension moyenne prédéterminée est maintenue pendant une durée prédéfinie qui est la plus courte possible, mais suffisante pour assurer l'enclenchement fiable du relais électromécanique.

En pratique, le dispositif de commande de bobine peut comprendre des moyens pour scruter la tension moyenne d'alimentation présente sur la sortie de relais, des moyens pour comparer cette tension moyenne d'alimentation avec une consigne de tension prédéterminée, et des moyens pour commander la modulation de largeur PWM de façon à maintenir dans la bobine de commande une valeur prédéterminée et constante de courant électrique moyen, quelles que soient les variations éventuelles de la tension de la source d'alimentation à courant continu.

De la sorte, il est possible de choisir la ou les tensions moyennes prédéterminées selon des valeurs au plus proche des tensions d'enclenchement et de déclenchement du relais électromécanique, sans risquer un dysfonctionnement du relais électromécanique lorsque la tension de la source d'alimentation à courant continu devient inférieure à la tension nominale de cette source. De même, lorsque la tension de la source d'alimentation à courant continu devient plus élevée que sa valeur nominale, cela n'augmente pas les pertes énergétiques du relais électromécanique, et cela n'augmente pas réchauffement généré par le relais électromécanique.

Le commutateur électronique peut avantageusement être un transistor de commutation dont l'émetteur est connecté à l'entrée de relais, dont le collecteur est connecté à une première borne d'alimentation de la bobine de commande, et dont la base est connectée à une seconde borne d'alimentation de la bobine de commande par l'intermédiaire d'une résistance de polarisation apte à assurer la saturation dudit transistor de commutation lorsque le commutateur maître est fermé.

De la sorte, la bobine de commande du relais électromécanique est alimentée à travers le transistor de commutation dès que le relais électromécanique est lui-même connecté à la source d'énergie principale, ce qui assure la fermeture du relais électromécanique et par conséquent l'alimentation du circuit de commande de la bobine du relais.

Avantageusement, on peut prévoir que ladite interface comprend :
- un premier transistor d'interface, dont la base reçoit le signal du générateur de tension de commande, et dont l'émetteur est connecté à la masse commune, de façon à être saturé en présence d'un signal du générateur de tension de commande, et de façon à être bloqué en l'absence d'un signal du générateur de tension de commande,
- un second transistor d'interface, dont l'émetteur est connecté à l'entrée de relais, dont le collecteur est connecté à la base du transistor de commutation, et dont la base est connectée au collecteur du premier transistor d'interface par l'intermédiaire d'une résistance de fuite, de sorte que le second transistor d'interface est saturé et bloque le transistor de commutation lorsque le premier transistor d'interface est lui-même saturé en présence d'un signal reçu du générateur de tension de commande, et de sorte que le second transistor d'interface est bloqué et n'a pas d'effet sur le transistor de commutation lorsque le premier transistor d'interface est lui-même bloqué en l'absence d'un signal reçu du générateur de tension de commande.

Selon un second aspect, la présente invention propose un dispositif de commande électronique pour actionneur dans un véhicule automobile, lequel dispositif comprend un module de commande électronique ayant une sortie fournissant la tension d'alimentation pour l'actionneur, lequel dispositif comprend en outre un dispositif de protection par relais électromécanique tel que défini ci-dessus, le module de commande électronique étant alimenté entre une masse commune et une sortie de relais dudit dispositif de protection par relais électromécanique.

Le dispositif de protection par relais électromécanique peut ainsi assurer la protection contre les risques d'incendie pouvant résulter d'une défaillance des composants électroniques du module de commande électronique, pendant les périodes où le véhicule est en mode parking.

De préférence, le module de commande électronique est de type dispositif électronique de découpage de tension à modulation de largeur PWM, apte à générer une tension d'alimentation d'actionneur découpée en modulation de largeur.

De la sorte, le module de commande électronique génère des pertes énergétiques réduites, ce qui réduit simultanément les risques d'élévation de température des composants électroniques constituant le module de commande électronique.

En pratique, le module de commande électronique peut avantageusement comprendre :
- un circuit électronique de puissance, ayant une entrée de puissance connectée entre la masse commune et la sortie de relais du dispositif de protection par relais électromécanique, ayant une sortie de puissance destinée à être connectée à l'actionneur électrique, comprenant un premier transistor à effet de champ à grille isolée dont le circuit source-drain est connecté d'une part à l'entrée de puissance, et est connecté d'autre part à la sortie de puissance par un conducteur de sortie pour être en série avec l'actionneur électrique, le circuit électronique de puissance comprenant une diode de roue libre connectée en polarisation inverse sur la sortie de puissance pour permettre la circulation du courant généré par la composante inductive de l'actionneur électrique lorsque le premier transistor à effet de champ à grille isolée est bloqué,
- une commande de commutation, apte à générer sur la grille dudit premier transistor à effet de champ à grille isolée un signal de commande sensiblement carré modulé en largeur.

Le dispositif de commande électronique selon l'invention peut avantageusement être implémenté dans un même boîtier contenant simultanément le module de commande électronique et le dispositif de protection par relais électromécanique. Cet assemblage est rendu possible par la réduction sensible des pertes énergétiques et des échauffements générés à la fois dans le module de commande électronique et dans le dispositif de protection par relais électromécanique.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
[Fig.1] La figure 1 est une représentation schématique du circuit électrique d'un mode de réalisation de dispositif de commande pour actionneur électrique selon l'invention ;
[Fig.2] La figure 2 illustre les variations temporelles possibles d'une tension de source d'alimentation à courant continu dans un véhicule automobile ;
[Fig.3] La figure 3 illustre les tensions d'enclenchement et de déclenchement d'un relais électromécanique ;
[Fig.4] La figure 4 illustre la variation de la tension moyenne appliquée à la bobine de commande du relais électromécanique de protection, selon un mode de réalisation de la présente invention ; et
[Fig.5] La figure 5 est une représentation du circuit électrique du dispositif de commutation par relais électromécanique à consommation réduite selon un mode de réalisation de l'invention, et sa connexion au dispositif de commande d'actionneur électrique.

### DESCRIPTION DES MODES DE REALISATION PREFERES

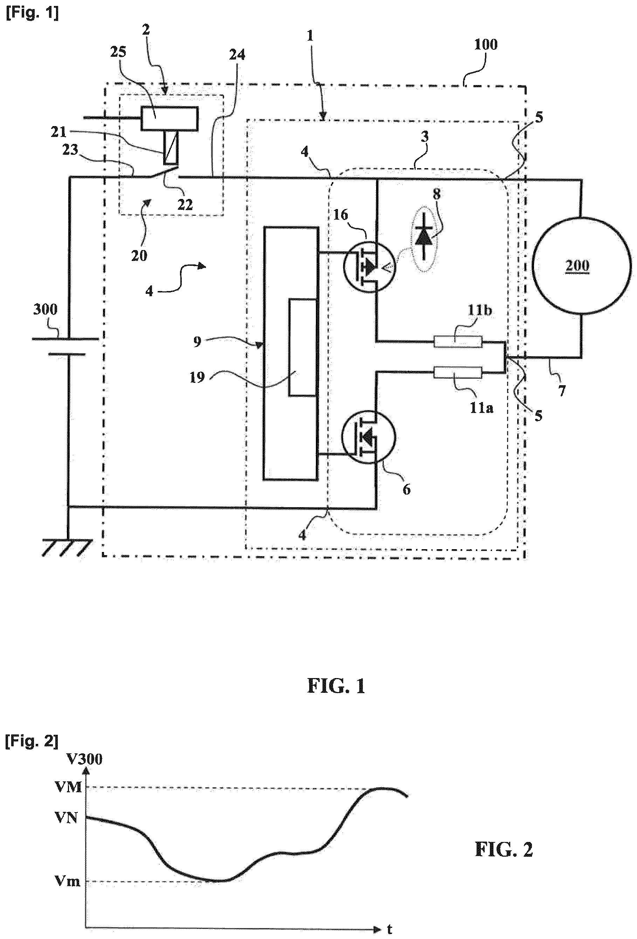

Sur la figure 1 est illustré schématiquement le circuit électrique d'un mode de réalisation particulier de dispositif de commande 100 pour actionneur électrique 200. L'actionneur électrique 200 est ici un moteur électrique, mais cela n'est nullement limitatif de la présente invention.

Le dispositif de commande 100 comprend, de façon générale, un module de commande électronique 1, qui fournit l'énergie électrique au moteur électrique 200, et qui est alimenté à partir d'une source d'alimentation à courant continu 300 par l'intermédiaire d'un dispositif de protection par relais électromécanique 2.

Le module de commande électronique 1 comprend un circuit électronique de puissance 3, ayant une entrée de puissance 4 destinée à être connectée à la source d'alimentation électrique à courant continu 300, et ayant une sortie de puissance 5 destinée à être connectée au moteur électrique 200. En l'espèce, le moteur électrique 200 à courant continu sert à la ventilation des échangeurs et du moteur d'un véhicule automobile, pour leur refroidissement. La source d'alimentation électrique à courant continu 300 est ainsi constituée par la batterie du véhicule.

Le circuit électronique de puissance 3 comprend un premier transistor 6 à effet de champ à grille isolée dont le circuit source-drain est connecté d'une part à l'entrée de puissance 4, et est connecté d'autre part à la sortie de puissance 5 par un conducteur de sortie 7 pour être en série avec le moteur électrique 200. Le circuit électronique de puissance 3 comprend une diode de roue libre 8 connectée en polarisation inverse sur la sortie de puissance 5. La diode de roue libre 8 permet la circulation du courant généré par la composante inductive du moteur électrique 200 lorsque le premier transistor 6 à effet de champ à grille isolée est bloqué (c'est-à-dire est à l'état non-conducteur).

Dans le mode de réalisation illustré sur la figure 1, la diode de roue libre 8 est en fait constituée par la diode de structure d'un deuxième transistor 16 à effet de champ à grille isolée.

La présence du premier transistor 6 à effet de champ à grille isolée permet un découpage de tension à modulation de largeur, généralement désigné par le sigle PWM (pulse width modulation - modulateur de largeur d'impulsion), produisant aux bornes du moteur électrique 200 une tension de sortie découpée à une fréquence d'environ 20 kHz et qui est tantôt égale à la tension d'entrée pendant les étapes de conduction du premier transistor 6 à effet de champ à grille isolée, tantôt sensiblement égale à zéro pendant les étapes de non-conduction du premier transistor 6 à effet de champ à grille isolée, et dont on fait varier la valeur moyenne par la modification du rapport des durées des étapes de conduction et des étapes de non-conduction du premier transistor 6 à effet de champ à grille isolée. On pilote ainsi la vitesse du moteur 200 pour l'adapter progressivement aux besoins en refroidissement du véhicule.

Le module de commande 1 comprend une commande de commutation 9 à microcontrôleur 19, apte à générer sur la grille dudit premier transistor 6 à effet de champ à grille isolée un signal de commande sensiblement carré modulé en largeur.

Le microcontrôleur 19 de la commande de commutation 9 constitue également des moyens de pilotage configurés pour mettre à l'état conducteur le deuxième transistor 16 à effet de champ à grille isolée pendant que le premier transistor 6 est à l'état non-conducteur.

Le premier transistor 6 à effet de champ à grille isolée est connecté électriquement par des premiers moyens de connexion 11a au conducteur de sortie 7.

Le deuxième transistor 16 à effet de champ à grille isolée est connecté électriquement par des deuxièmes moyens de connexion 11b au conducteur de sortie 7.

Le dispositif de protection par relais électromécanique 2 comprend un relais électromécanique 20, ayant un circuit magnétique dans lequel un champ magnétique généré par une bobine de commande 21 permet de déplacer un contact 22 connecté électriquement en série entre une entrée de relais 23 et une sortie de relais 24. L'entrée de relais 23 est destinée à être connectée à la source d'alimentation à courant continu 300, tandis que la sortie de relais 24 est destinée à être connectée pour alimenter le module électronique 1 à protéger.

La bobine de commande 21 est alimentée par un dispositif de commande de bobine 25, de type à découpage de tension à modulation de largeur PWM.

On considère maintenant la figure 2, qui illustre schématiquement les variations possibles de la tension du réseau de bord du véhicule, c'est-à-dire de la tension V300 aux bornes de la source d'alimentation à courant continu 300. En l'espèce, on a illustré des variations descendantes depuis la tension nominale VN, par exemple 13 V, jusqu'à une tension minimale Vm, par exemple 8 V, pouvant se produire par temps froid en cas de charge électrique importante. On a ensuite illustré des variations montantes depuis la tension minimale Vm jusqu'à une tension maximale VM, par exemple 24 V, pouvant se produire par exemple en cas de connexion d'une source d'alimentation extérieure. On comprend que le dispositif de commande d'actionneur électrique doit pouvoir fonctionner correctement malgré de telles variations possibles de la tension V300 du réseau de bord du véhicule.

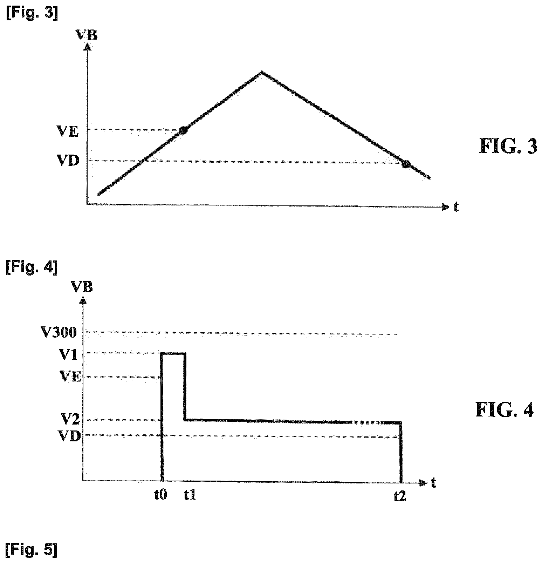

On considère maintenant la figure 3, qui illustre schématiquement les conditions de fonctionnement de relais électromécaniques tels que le relais électromécanique 20 incorporé dans le dispositif de commutation par relais électromécanique 2. Le schéma illustre la variation temporelle d'une tension moyenne VB appliquée sur la bobine de commande 21 du relais électromécanique 20. En l'espèce, on a illustré une variation montante de la tension VB. Lorsque celle-ci atteint une tension d'enclenchement VE, qui est une caractéristique propre du relais électromécanique 20, le relais est enclenché, c'est-à-dire que son contact 22 se ferme pour permettre le passage d'un courant électrique entre l'entrée de relais 23 et la sortie de relais 24. On a ensuite illustré une variation descendante de la tension VB, depuis un maximum supérieur à la tension d'enclenchement VE. Lorsque la tension moyenne VB atteint une tension de déclenchement VD, le relais électromécanique 20 est déclenché, c'est-à-dire que son contact 22 s'ouvre et interdit le passage du courant électrique entre l'entrée de relais 23 et la sortie de relais 24. On constate que la tension d'enclenchement VE est toujours supérieure à la tension de déclenchement VD, et ces tensions sont des caractéristiques intrinsèques qui dépendent de la constitution du relais électromécanique 20. Par exemple, la tension de déclenchement VD peut-être d'environ 3 V, tandis que la tension d'enclenchement peut-être d'environ 5 V.

De façon traditionnelle, lorsqu'on veut utiliser un relais électromécanique 20 pour assurer la protection d'un module de commande électronique 1, il faut choisir un relais électromécanique 20 dont le fonctionnement d'enclenchement et de déclenchement restera possible quelle que soit la tension V300 du réseau de bord du véhicule. On comprend que l'enclenchement certain du relais électromécanique 20 ne sera réalisé que si la tension minimale Vm du réseau de bord du véhicule est supérieure à la tension d'enclenchement VE qui est nécessaire pour l'enclenchement du relais électromécanique 20. Ainsi, pour une tension minimale Vm égale à 8 V dans le réseau de bord du véhicule, il faudra choisir un relais électromécanique 20 dont la tension d'enclenchement est inférieure à 8 V, avec une marge de sécurité. On peut choisir une tension d'enclenchement d'environ 5 V à 20 °C, soit environ 6.7 V à 110 °C (variation de résistivité du cuivre en température), à laquelle on ajoute la tension directe d'une diode (1 V), de sorte que la marge de sécurité est de 0.3 V.

Lors du fonctionnement du véhicule, le relais électromécanique 20 du dispositif de protection est normalement à l'état enclenché, de sorte que la bobine de commande 21 doit être alimentée en énergie électrique. Dans cet état, la bobine de commande 21 est un élément résistif, parcouru par un courant électrique proportionnel à la tension électrique appliquée à ses bornes. On comprend alors que l'énergie électrique dépensée dans la bobine de commande 21, qui est elle-même proportionnelle au carré du courant électrique, se trouve fortement surdimensionnée, déjà lorsque la tension de bord du réseau est proche de la tension nominale VN, et surtout lorsque la tension du réseau de bord dépasse la tension nominale VN. Il en résulte des pertes énergétiques non négligeables dans le relais électromécanique 20, et une augmentation correspondante de l'échauffement.

Selon la présente invention, pour réduire ces pertes énergétiques et l'augmentation correspondante d'échauffement, le dispositif de commande de bobine 25 est de type dispositif électronique de découpage de tension à modulation de largeur PWM, permettant d'alimenter la bobine de commande 21 selon au moins une tension moyenne prédéterminée qui peut être inférieure à la tension nominale VN du réseau de bord, pour autant qu'elle reste supérieure à la tension de fonctionnement du relais électromécanique 20.

En l'espèce, on peut trouver avantage à appliquer, sur la bobine de commande 21, une tension telle qu'illustrée sur la figure 4 : on considère qu'à l'instant t0 on met le contact dans le véhicule automobile, provoquant l'alimentation du dispositif de commande de bobine 25 à partir de la source d'alimentation à courant continu 300. À partir de cet instant t0, le dispositif de commande de bobine 25 fournit à la bobine de commande 21 une première tension moyenne V1 prédéterminée supérieure à la tension d'enclenchement VE, pendant une étape d'enclenchement à durée prédéfinie qui se termine à l'instant t1. A partir de l'instant t1, le dispositif de commande de bobine 25 fournit à la bobine de commande 21 une seconde tension moyenne V2 prédéterminée peu supérieure à la tension de déclenchement VD, de façon à maintenir l'enclenchement du relais électromécanique 20 pendant toute la période de fonctionnement du véhicule automobile, c'est-à-dire jusqu'à un instant t2. À l'instant t2, le contact est coupé dans le véhicule automobile, ce qui interrompt l'alimentation des dispositifs de commande, et le relais électromécanique 20 retourne à son état déclenché, contact 22 ouvert.

En pratique, la tension V1 peut être égale à la tension V300 du réseau de bord du véhicule, car l'énergie dépensée pendant l'étape d'enclenchement peut être négligée si la durée de cette étape est courte. Par contre, la tension V2 doit être choisie la plus basse possible, pour limiter les pertes et les échauffements. Par exemple, on peut choisir une tension V2 égale à VD + 1 ou 2 V.

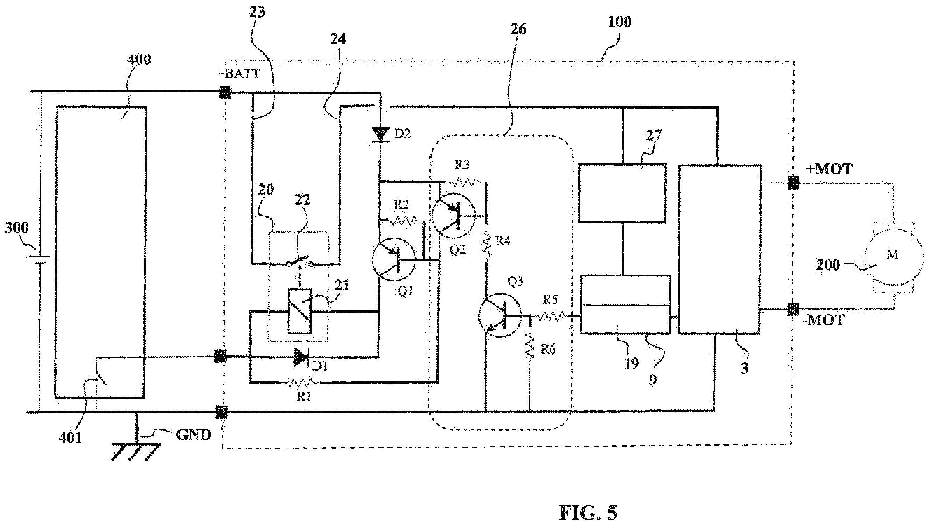

On considère maintenant la figure 5, qui illustre de façon plus détaillée le schéma électrique d'un dispositif de protection par relais électromécanique selon un mode de réalisation de la présente invention. Sur ce schéma, on retrouve la plupart des organes constitutifs du dispositif de commande 100 de l'actionneur électrique 200 illustrés sur la figure 1, et les mêmes organes constitutifs sont repérés par les mêmes références numériques. On retrouve ainsi le relais électromécanique 20, la bobine de commande 21, le contact 22, l'entrée de relais 23, la sortie de relais 24, la source d'alimentation à courant continu 300, le circuit électronique de puissance 3, la commande de commutation 9 à microcontrôleur 19.

Dans ce mode de réalisation, le dispositif de commande de bobine comprend un commutateur électronique, avantageusement sous forme d'un transistor de commutation Q1, qui est piloté, par l'intermédiaire d'une interface 26, par un générateur de tension de commande 9 constitué essentiellement par le microcontrôleur 19. La bobine de commande 21 est connectée à l'entrée de relais 23 par l'intermédiaire dudit commutateur électronique Q1 avec une diode D2 en série, tandis qu'une diode de roue libre D1 est connectée en polarisation inverse aux bornes de la bobine de commande 21. La bobine de commande 21 est par ailleurs connectée à une masse commune GND par l'intermédiaire d'un commutateur maître 401, qui est lui-même extérieur au dispositif de commande 100 selon l'invention, et qui par exemple fait partie du calculateur moteur 400.

Le générateur de tension de commande 9 à microcontrôleur 19, est alimenté entre la masse commune GND et la sortie de relais 24. De la sorte, le microcontrôleur 19 n'est alimenté et ne fonctionne que lorsque le contact 22 du relais électromécanique 20 est fermé.

Le transistor Q1, constituant le commutateur électronique, est un transistor de commutation dont l'émetteur est connecté à l'entrée de relais 23 par l'intermédiaire de la diode D2, dont le collecteur est connecté à une première borne d'alimentation de la bobine de commande 21, et dont la base est connectée à une seconde borne d'alimentation de la bobine de commande 21 par l'intermédiaire d'une résistance de polarisation R1 dont la valeur est choisie pour assurer la saturation dudit transistor de commutation Q1 lorsque le commutateur maître 401 est fermé, en l'absence de signaux produits par le microcontrôleur 19.

L'interface 26 comprend un premier transistor d'interface Q3, dont la base reçoit le signal du microcontrôleur 19, et dont l'émetteur est connecté à la masse commune GND, de façon à être saturé en présence d'un signal présent en sortie du microcontrôleur 19, et de façon à être bloqué en l'absence d'un tel signal en sortie du microcontrôleur 19. L'interface 26 comprend un second transistor d'interface Q2, dont l'émetteur est connecté à l'entrée de relais 23 par l'intermédiaire de la diode D2, dont le collecteur est connecté à la base du transistor de commutation Q1, et dont la base est connectée au collecteur du premier transistor d'interface Q3 par l'intermédiaire d'une résistance de fuite R4. De la sorte, le second transistor d'interface Q2 est saturé et bloque le transistor de commutation Q1 lorsque le premier transistor d'interface Q3 est lui-même saturé en présence d'un signal reçu du microcontrôleur 19, et de sorte que le second transistor d'interface Q2 est bloqué et n'a pas d'effet sur le transistor de commutation Q1 lorsque le premier transistor d'interface Q3 est lui-même bloqué en l'absence d'un signal reçu microcontrôleur 19.

En fonctionnement, le microcontrôleur 19 envoie sur la base du premier transistor d'interface Q3 des signaux de commande à modulation de largeur, et ces signaux sont mis en forme et transmis par l'interface 26 au transistor de commutation Q1 qui alimente ainsi la bobine de commande 21 selon une tension découpée à modulation de largeur. Le microcontrôleur 19 est associé à un circuit de régulation de tension 27, comprenant des moyens pour scruter la tension d'alimentation présente à la sortie de relais 24, des moyens pour comparer cette tension d'alimentation avec une consigne de tension prédéterminée (la tension V1 ou la tension V2), et des moyens pour commander la modulation de largeur PWM pilotée par le microcontrôleur 19 de façon à augmenter le rapport cyclique de découpage lorsque la tension d'alimentation diminue sur la sortie de relais 24, et de façon à réduire le rapport cyclique de découpage lorsque la tension d'alimentation augmente sur la sortie de relais 24, pour maintenir dans la bobine de commande 21 une valeur moyenne de courant électrique prédéterminée (correspondant à une tension moyenne d'alimentation V1 ou V2), quelles que soient les variations éventuelles de la tension délivrée par la source d'alimentation à courant continu 300.

Le relais électromécanique 20 protège également le module de commande électronique 1 en cas d'inversion accidentelle de polarité de la source d'alimentation à courant continu 300. En effet, la diode D2 empêche alors le passage du courant d'excitation dans la bobine de commande 21, et empêche le passage de courant électrique en inverse dans l'interface 26, de sorte que le contact 22 du relais électromécanique 20 reste ouvert et interdit l'alimentation du module de commande électronique 1.

Comme illustré schématiquement sur la figure 1, le dispositif de commande 100 selon l'invention, est de préférence implémenté dans un même boîtier (100) contenant simultanément le module de commande électronique 1 et le dispositif de protection par relais électromécanique 2. Les dispositions particulières du module de commande électronique 1 et du dispositif de protection par relais électromécanique 2, qui réduisent sensiblement les pertes énergétiques et les échauffements, permettent une telle implémentation dans un même boîtier (100), sans risque d'échauffement excessif susceptible de dégrader ou de détériorer les composants électroniques constituant le dispositif de commande 100.

En outre, selon un mode de réalisation avantageux, on pourra faire en sorte que le relais électromécanique 20 soit lui-même refroidi en assurant une conduction thermique suffisamment bonne entre la bobine de commande 21 et les conducteurs électriques de puissance connectés à l'entrée de relais 23 et à la sortie de relais 24.

## Revendications

1. Dispositif de protection par relais électromécanique (2), comprenant :
- un relais électromécanique (20), ayant un circuit magnétique dans lequel un champ magnétique est généré par une bobine de commande (21) lorsque celle-ci est parcourue par un courant électrique fourni sur ses bornes électriques d'entrée, et ayant un circuit de puissance à contact (22) déplaçable sous l'effet dudit champ magnétique pour être normalement ouvert lorsque la bobine de commande (21) n'est pas alimentée et pour se fermer lorsque la bobine de commande (21) est alimentée selon une tension supérieure à une tension d'enclenchement (VE), ledit contact (22) étant connecté électriquement en série entre une entrée de relais (23) et une sortie de relais (24), l'entrée de relais (23) étant destinée à être connectée à une source d'alimentation à courant continu (300), la sortie de relais (24) étant destinée à être connectée pour alimenter un module de commande électronique (1) à protéger,
- un dispositif de commande de bobine (25), connecté pour alimenter la bobine de commande (21) selon au moins une tension moyenne prédéterminée (V1, V2) inférieure à la tension (V300) de la source d'alimentation à courant continu (300),
- le dispositif de commande de bobine (25) est agencé pour fournir à la bobine de commande (21) une première tension moyenne prédéterminée (V1) supérieure à la tension d'enclenchement (VE) du relais électromécanique (20) pendant une étape d'enclenchement à durée prédéfinie après que le dispositif de commande de bobine (25) ait été alimenté à partir de la source d'alimentation à courant continu (300),
- le dispositif de commande de bobine (25) est agencé pour fournir à la bobine de commande (21) une deuxième tension moyenne prédéterminée (V2) peu supérieure à une tension de déclenchement (VD) du relais électromécanique (20) après l'étape d'enclenchement, et pour maintenir ladite deuxième tension moyenne prédéterminée (V2) tant que le dispositif de commande de bobine (25) reste alimenté à partir de la source d'alimentation à courant continu (300),
- le dispositif de commande de bobine (25) est agencé pour interdire l'alimentation de la bobine de commande (21) lorsque le dispositif de commande de bobine (25) n'est pas alimenté,
- le dispositif de commande de bobine (25) comprend un commutateur électronique (Q1) piloté, par l'intermédiaire d'une interface (26), par un générateur de tension de commande (9),
**caractérisé en ce que** :
- le dispositif de commande de bobine (25) est de type à découpage de tension à modulation de largeur PWM,
- la bobine de commande (21) est connectée d'un côté à l'entrée de relais (23) par l'intermédiaire dudit commutateur électronique (Q1) du dispositif de commande de bobine (25), et est connectée de l'autre côté à une masse commune (GND) par l'intermédiaire d'un commutateur maître (401) extérieur au dispositif de protection par relais électromécanique (2),
- le générateur de tension de commande (9) est alimenté entre la masse commune (GND) et la sortie de relais (24), de sorte qu'il n'est alimenté et ne fonctionne que lorsque ledit contact (22) du relais électromécanique (20) est fermé,
- le commutateur électronique (Q1) est agencé pour être à l'état fermé lorsque le commutateur maître (401) est fermé et en l'absence de signal reçu du générateur de tension de commande (9), et pour être à l'état ouvert en présence d'un signal reçu du générateur de tension de commande (9).

2. Dispositif de protection par relais électromécanique (2) selon la revendication 1, **caractérisé en ce que** le commutateur électronique (Q1) est un transistor de commutation dont l'émetteur est connecté à l'entrée de relais (23), dont le collecteur est connecté à une première borne d'alimentation de la bobine de commande (21), et dont la base est connectée à une seconde borne d'alimentation de la bobine de commande (21) par l'intermédiaire d'une résistance de polarisation (R1) apte à assurer la saturation dudit transistor de commutation (Q1) lorsque le commutateur maître (401) est fermé.

3. Dispositif de protection par relais électromécanique (2) selon la revendication 2, **caractérisé en ce que** ladite interface (26) comprend :
- un premier transistor d'interface (Q3), dont la base reçoit le signal du générateur de tension de commande (9), et dont l'émetteur est connecté à la masse commune (GND), de façon à être saturé en présence d'un signal du générateur de tension de commande (9), et de façon à être bloqué en l'absence d'un signal du générateur de tension de commande (9),
- un second transistor d'interface (Q2), dont l'émetteur est connecté à l'entrée de relais (23), dont le collecteur est connecté à la base du transistor de commutation (Q1), et dont la base est connectée au collecteur du premier transistor d'interface (Q3) par l'intermédiaire d'une résistance de fuite (R4), de sorte que le second transistor d'interface (Q2) est saturé et bloque le transistor de commutation (Q1) lorsque le premier transistor d'interface (Q3) est lui-même saturé en présence d'un signal reçu du générateur de tension de commande (9), et de sorte que le second transistor d'interface (Q2) est bloqué et n'a pas d'effet sur le transistor de commutation (Q1) lorsque le premier transistor d'interface (Q3) est lui-même bloqué en l'absence d'un signal reçu du générateur de tension de commande (9).

4. Dispositif de protection par relais électromécanique (2) selon l'une quelconque des revendications 1 à 3, **caractérisé en ce que** le dispositif de commande de bobine (25) comprend des moyens (27) pour scruter la tension d'alimentation présente sur la sortie de relais (24), des moyens pour comparer cette tension d'alimentation avec une consigne de tension prédéterminée, et des moyens (9) pour commander la modulation de largeur PWM de façon à maintenir dans la bobine de commande (21) une valeur constante de courant électrique moyen, quelles que soient les variations éventuelles de la tension (V300) de la source d'alimentation à courant continu (300).

5. Dispositif de commande électronique (100) pour actionneur (200) dans un véhicule automobile, **caractérisé en ce qu'**il comprend un module de commande électronique (1) ayant une sortie fournissant la tension d'alimentation pour l'actionneur (200), **en ce qu'**il comprend un dispositif de protection par relais électromécanique (2) selon l'une quelconque des revendications 1 à 4, et **en ce que** le module de commande électronique est alimenté entre une masse commune (GND) et une sortie de relais (24) dudit dispositif de protection par relais électromécanique (2).

6. Dispositif de commande électronique (100) selon la revendication 5, **caractérisé en ce que** le module de commande électronique (1) génère une tension d'alimentation d'actionneur découpée en modulation de largeur.

7. Dispositif de commande électronique (100) selon la revendication 6, **caractérisé en ce que** le module de commande électronique (1) comprend :
- un circuit électronique de puissance (3), ayant une entrée de puissance (4) connectée entre la masse commune (GND) et la sortie de relais (24) du dispositif de protection par relais électromécanique (2), ayant une sortie de puissance (5) destinée à être connectée à l'actionneur électrique (200), comprenant un premier transistor (6) à effet de champ à grille isolée dont le circuit source-drain est connecté d'une part à l'entrée de puissance (4), et est connecté d'autre part à la sortie de puissance (5) par un conducteur de sortie (7) pour être en série avec l'actionneur électrique (200), le circuit électronique de puissance (3) comprenant une diode de roue libre (8) connectée en polarisation inverse sur la sortie de puissance (5) pour permettre la circulation du courant généré par la composante inductive de l'actionneur électrique (200) lorsque le premier transistor (6) à effet de champ à grille isolée est bloqué,
- une commande de commutation (9), apte à générer sur la grille dudit premier transistor (6) à effet de champ à grille isolée un signal de commande sensiblement carré modulé en largeur.

8. Dispositif de commande électronique (100) selon l'une des revendications 6 ou 7, **caractérisé en ce qu'**il est implémenté dans un même boîtier contenant simultanément ledit module de commande électronique (1) et ledit dispositif de protection par relais électromécanique (2).

## Patentansprüche

1. Elektromechanische Relais-Schutzvorrichtung (2), umfassend:
- ein elektromechanisches Relais (20), aufweisend einen Magnetkreis, in dem ein Magnetfeld von einer Steuerspule (21) erzeugt ist, wenn diese von einem elektrischen Strom durchströmt ist, der durch ihre elektrischen Eingangsanschlüsse zugeführt ist, und aufweisend einen Leistungskreisschaltkontakt (22), der verschiebbar ist unter der Wirkung besagten Magnetfeldes, um normalerweise offen sein, wenn die Steuerspule (21) nicht versorgt ist, und um zu schließen, wenn die Steuerspule (21) mit einer höheren Spannung auf eine Einschaltspannung (VE) versorgt ist, wobei der Schaltkontakt (22) in Reihe zwischen einem Relaiseingang (23) und einem Relaisausgang (24) elektrisch verbunden ist, wobei der Relaiseingang (23) vorgesehen ist, mit einer Gleichstromquelle (300) verbunden zu werden, wobei der Relaisausgang (24) zur Verbindung zum Versorgen eines zu schützenden elektronischen Steuermoduls (1) vorgesehen ist,
- eine Spulensteuervorrichtung (25), verbunden zum Versorgen der Steuerspule (21) mit zumindest einer vorabbestimmten Mittelspannung (V1, V2), die niedriger ist als die Spannung (V300) der Gleichstromquelle (300),
- die Spulensteuervorrichtung (25) ist angeordnet, um der Steuerspule (21) eine erste vorabbestimmte Mittelspannung (V1) zuzuführen, die größer ist als die Einschaltspannung (VE) des elektromechanischen Relais (20) während eines Einschaltschritts mit einer voreingestellten Dauer, nachdem die Spulensteuervorrichtung (25) von der Gleichstromquelle (300) versorgt wurde,
- die Spulensteuervorrichtung (25) ist angeordnet, um der Steuerspule (21) eine zweite vorabbestimmte Mittelspannung (V2) zuzuführen, die wenig größer ist als eine Triggerspannung (VD) des elektromechanischen Relais (20) nach dem Einschaltschritt, und um besagte zweite vorabbestimmte Mittelspannung (V2) aufrechtzuerhalten, solange die Spulensteuervorrichtung (25) von der Gleichstromquelle (300) versorgt ist,
- die Spulensteuervorrichtung (25) ist angeordnet, um die Versorgung der Steuerspule (21) zu verhindern, wenn die Spulensteuervorrichtung (25) nicht versorgt ist,
- die Spulensteuervorrichtung (25) umfasst einen elektronischen Schalter (Q1), der gesteuert ist, über eine Schnittstelle (26), von einem Steuerspannungsgenerator (9),
**dadurch gekennzeichnet, dass:**
- die Spulensteuervorrichtung (25) ist vom Typ eines Spannungszerhackers mit PWM Weitenmodulation,
- die Steuerspule (21) ist auf einer Seite verbunden mit dem Relaiseingang (23) über besagten elektronischen Schalter (Q1) der Spulensteuervorrichtung (25), und ist auf der anderen Seite verbunden mit einer gemeinsamen Masse (GND) über einen Hauptschalter (401) außerhalb der elektromechanischen Relais-Schutzvorrichtung (2),
- der Steuerspannungsgenerator (9) ist so zwischen der gemeinsamen Masse (GND) und dem Relaisausgang (24) versorgt, damit er nicht versorgt ist und nur funktioniert, wenn besagter Kontakt (22) des elektromechanischen Relais (20) geschlossen ist,
- der elektronische Schalter (Q1) ist angeordnet, um in dem geschlossenen Zustand zu sein, wenn der Hauptschalter (401) geschlossen ist und in Abwesenheit eines von dem Steuerspannungsgenerator (9) empfangenen Signals, und um in dem offenen Zustand zu sein in Anwesenheit eines von dem Steuerspannungsgenerator (9) empfangenen Signals.

2. Elektromechanische Relais-Schutzvorrichtung (2) nach Anspruch 1, **dadurch gekennzeichnet**, das der elektronische Schalter (Q1) ein Schalttransistor ist, dessen Emitter mit dem Relaiseingang (23) verbunden ist, dessen Kollektor mit einer ersten Versorgungsanschluss der Steuerspule (21) verbunden ist und dessen Basis mit einem zweiten Versorgungsanschluss der Steuerspule (21) verbunden ist über einen Vorspannungswiderstand (R1), geeignet zum Gewährleisten der Sättigung des Schalttransistors (Q1), wenn der Hauptschalter (401) geschlossen ist.

3. Elektromechanische Relais-Schutzvorrichtung (2) nach Anspruch 2, **dadurch gekennzeichnet, dass** besagte Schnittstelle (26) umfasst:
- einen ersten Schnittstellentransistor (Q3), dessen Basis das Signal des Steuerspannungsgenerators (9) empfängt, und dessen Emitter mit der gemeinsamen Masse (GND) derart verbunden ist, dass er in Anwesenheit eines Signals des Steuerspannungsgenerators (9) gesättigt ist und derart, dass er bei Abwesenheit eines Signals des Steuerspannungsgenerators (9) blockiert ist,
- einen zweiten Schnittstellentransistor (Q2), dessen Emitter mit dem Relaiseingang (23) verbunden ist, dessen Kollektor mit der Basis des Schalttransistors (Q1) verbunden ist und dessen Basis mit dem Kollektor des ersten Schnittstellentransistor (Q3) über einen Ableitwiderstand (R4) verbunden ist, sodass der zweite Schnittstellentransistor (Q2) gesättigt ist und den Schalttransistor (Q1) blockiert, wenn der erste Schnittstellentransistor (Q3) selbst in Anwesenheit eines vom Steuerspannungsgenerator (9) empfangenen Signals gesättigt ist, und sodass der zweite Schnittstellentransistor (Q2) blockiert ist und keine Wirkung hat auf den Schalttransistor (Q1), wenn der erste Schnittstellentransistor (Q3) selbst in der Abwesenheit eines vom Steuerspannungsgenerator (9) empfangenen Signals blockiert ist.

4. Elektromechanische Relais-Schutzvorrichtung (2) nach einem der Ansprüche 1 bis 3, **dadurch gekennzeichnet, dass** die Spulensteuervorrichtung (25) Mittel (27) zum Abtasten der derzeitigen Versorgungsspannung auf dem Ausgangsrelais (24) umfasst, Mittel zum Vergleichen dieser Versorgungsspannung mit einem vorgegebenen Spannungssollwert, und Mittel (9) zum Steuern der PWM Weitenmodulation derart, um in der Steuerspule (21) einen konstanten Wert mittleren elektrischen Stromes aufrechtzuerhalten, unabhängig von irgendwelchen Schwankungen in der Spannung (V300) der Gleichstromquelle (300).

5. Elektronische Steuervorrichtung (100) für einen Aktuator (200) in einem Automobilfahrzeug, **dadurch gekennzeichnet, dass** sie ein elektronisches Steuermodul (1), aufweisend einen Ausgang, führend die Versorgungsspannung für den Aktuator (200), umfasst, dass sie eine elektromechanische Relais-Schutzvorrichtung (2) nach einem der Ansprüche 1 bis 4 umfasst und dadurch, dass das elektronische Steuermodul zwischen einer gemeinsamen Masse (GND) und einem Relaisausgang (24) besagter elektromechanischen Relais-Schutzvorrichtung (2) versorgt ist.

6. Elektronische Steuervorrichtung (100) nach Anspruch 5, **dadurch gekennzeichnet, dass** das elektronische Steuermodul (1) eine Unterbrechung der Aktuator-Versorgungsspannung in der Weitenmodulation erzeugt.

7. Elektronische Steuervorrichtung (100) nach Anspruch 6, **dadurch gekennzeichnet, dass** das elektronische Steuermodul (1) umfasst:
- einen elektronischen Leistungsstromkreis (3), aufweisend eine Eingangsleistung (4), verbunden zwischen der gemeinsamen Masse (GND) und dem Relaisausgang (24) der elektromechanischen Relais-Schutzvorrichtung (2), aufweisend eine Ausgangsleistung (5), vorabbestimmt zur Verbindung mit einem elektrischen Aktuator (200), umfassend einen ersten Isoliergate-Feldeffekttransistor (6), dessen Source-Drain - Strecke einerseits mit der Eingangsleistung (4) verbunden ist, und andererseits verbunden ist mit der Ausgangsleistung (5) über einen Ausgangsleiter (7), um in Reihe mit dem elektrischen Aktuator (200) zu stehen, der elektronische Leistungsstromkreis (3) umfassend eine Freilaufdiode (8), die in Sperrrichtung mit der Ausgangsleistung (5) verbunden ist, um den Stromfluss zuzulassen, der von der induktiven Komponente des elektrischen Aktuators (200) erzeugt ist, wenn der erste Isoliergate-Feldeffekttransistor (6) blockiert ist,
- eine Steuerungsschaltung (9), die in der Lage ist, auf dem Gate des besagten ersten Isoliergate-Feldeffekttransistors (6) ein in der Weite moduliertes im Wesentlichen quadratisches Steuersignal zu erzeugen.

8. Elektronische Steuervorrichtung (100) nach einem der Ansprüche 6 oder 7, **dadurch gekennzeichnet, dass** sie in der gleichen Box implementiert ist, die gleichzeitig besagtes elektronische Steuermodul (1) und die elektromechanische Relais-Schutzvorrichtung (2) enthält.

## Claims

1. 1 - A device for protection by means of electromechanical relay (2), comprising:
- an electromechanical relay (20), having a magnetic circuit in which a magnetic field is generated by a control coil (21) when an electric current supplied over one of the electrical input terminals of said control coil flows through the latter, and having a contact power circuit (22) that is movable under the effect of said magnetic field so as to be normally open when the control coil (21) is not being supplied with power and to close when the control coil (21) is supplied with power at a voltage higher than a switch-on voltage (VE), said contact (22) being electrically connected in series between a relay input (23) and a relay output (24), the relay input (23) being intended to be connected to a DC power source (300) and the relay output (24) being intended to be connected so as to supply power to an electronic control module (1) to be protected;
- a coil control device (25), connected so as to supply power to the control coil (21) at at least one predetermined average voltage (V1, V2) lower than the voltage (V300) of the DC power source (300);
- the coil control device (25) is arranged to deliver, to the control coil (21), a first predetermined average voltage (V1) that is higher than the switch-on voltage (VE) of the electromechanical relay (20) during an engagement step with a predefined duration after the coil control device (25) has been supplied with power from the DC power source (300);
- the coil control device (25) is arranged to deliver, to the control coil (21), a second predetermined average voltage (V2) that is not much higher than a switch-off voltage (VD) of the electromechanical relay (20) after the engagement step, and to maintain said second predetermined average voltage (V2) for as long as the coil control device (25) is being supplied with power from the DC power source (300);
- the coil control device (25) is arranged to prevent the control coil (21) from being supplied with power while the coil control device (25) is not being supplied with power;
- the coil control device (25) comprises an electronic switch (Q1) that is driven, via an interface (26), by a control voltage generator (9),
wherein:
- the coil control device (25) is a pulse-width-modulation (PWM) voltage-switching device;
- the control coil (21) is connected on one side to the relay input (23) via said electronic switch (Q1) of the coil control device (25), and is connected on the other side to a common ground (GND) via a master switch (401) outside the device for protection by means of electromechanical relay (2);
- the control voltage generator (9) is supplied with power between the common ground (GND) and the relay output (24), such that it is supplied with power and operational only when said contact (22) of the electromechanical relay (20) is closed;
- the electronic switch (Q1) is arranged so as to be in the closed state when the master switch (401) is closed and in the absence of a signal received from the control voltage generator (9), and to be in the open state in the presence of a signal received from the control voltage generator (9).

2. 2 - The device for protection by means of electromechanical relay (2) as claimed in claim 1, wherein the electronic switch (Q1) is a switching transistor, the emitter of which is connected to the relay input (23), the collector of which is connected to a first power supply terminal of the control coil (21), and the base of which is connected to a second power supply terminal of the control coil (21) via a biasing resistor (R1) that is capable of saturating said switching transistor (Q1) when the master switch (401) is closed.

3. 3 - The device for protection by means of electromechanical relay (2) as claimed in claim 2, wherein said interface (26) comprises:
- a first interface transistor (Q3), the base of which receives the signal from the control voltage generator (9), and the emitter of which is connected to the common ground (GND), so as to be saturated in the presence of a signal from the control voltage generator (9), and so as to be off in the absence of a signal from the control voltage generator (9);
- a second interface transistor (Q2), the emitter of which is connected to the relay input (23), the collector of which is connected to the base of the switching transistor (Q1), and the base of which is connected to the collector of the first interface transistor (Q3) via a leakage resistor (R4), such that the second interface transistor (Q2) is saturated and turns the switching transistor (Q1) off when the first interface transistor (Q3) is itself saturated in the presence of a signal received from the control voltage generator (9), and such that the second interface transistor (Q2) is off and has no effect on the switching transistor (Q1) when the first interface transistor (Q3) is itself off in the absence of a signal received from the control voltage generator (9).

4. 4 - The device for protection by means of electromechanical relay (2) as claimed in any one of claims 1 to 3, wherein the coil control device (25) comprises means (27) for monitoring the supply voltage present on the relay output (24), means for comparing this supply voltage with a predetermined voltage setpoint, and means (9) for controlling the pulse-width modulation (PWM) so as to maintain, in the control coil (21), an average electric current of constant value regardless of any variations in the voltage (V300) of the DC power source (300).

5. 5 - An electronic control device (100) for an actuator (200) in a motor vehicle, wherein it comprises an electronic control module (1) having an output delivering the supply voltage for the actuator (200), and wherein it comprises a device for protection by means of electromechanical relay (2) as claimed in any one of claims 1 to 4, and wherein the electronic control module is supplied with power between a common ground (GND) and a relay output (24) of said device for protection by means of electromechanical relay (2).

6. 6 - The electronic control device (100) as claimed in claim 5, wherein the electronic control module (1) generates a pulse-width-modulation-switched actuator supply voltage.

7. 7 - The electronic control device (100) as claimed in claim 6, wherein the electronic control module (1) comprises:
- a power electronic circuit (3), having a power input (4) connected between the common ground (GND) and the relay output (24) of the device for protection by means of electromechanical relay (2), having a power output (5) that is intended to be connected to the electric actuator (200), comprising a first insulated-gate field-effect transistor (6), the source-drain circuit of which is connected on one side to the power input (4) and on the other side to the power output (5) by an output conductor (7) so as to be in series with the electric actuator (200), the power electronic circuit (3) comprising a flyback diode (8) that is connected to the power output (5) in reverse-biased configuration so as to allow the current generated by the inductive component of the electric actuator (200) to flow when the first insulated-gate field-effect transistor (6) is off;
- a switching control (9), capable of generating, on the gate of said first insulated-gate field-effect transistor (6), a substantially square-wave width-modulated control signal;

8. 8 - The electronic control device (100) as claimed in either of claims 6 and 7, wherein it is implemented in one and the same housing containing both said electronic control module (1) and said device for protection by means of electromechanical relay (2).
